Europäisches Patentamt

(19) European Patent Office

Office européen des brevets

(11) Publication number: **0 279 473 B1**

(12) # EUROPEAN PATENT SPECIFICATION

(45) Date of publication of patent specification :
**17.07.91 Bulletin 91/29**

(51) Int. Cl.⁵ : **F16G 5/16**

(21) Application number : **88200066.4**

(22) Date of filing : **16.01.88**

(54) **Method for mounting an assembled transmission belt and a device for mounting said belt.**

(30) Priority : **20.01.87 NL 8700122**

(43) Date of publication of application :
**24.08.88 Bulletin 88/34**

(45) Publication of the grant of the patent :
**17.07.91 Bulletin 91/29**

(84) Designated Contracting States :
**DE FR GB IT NL SE**

(56) References cited :
**EP-A- 0 014 013**
**EP-A- 0 204 360**
**DE-A- 2 643 528**

(73) Proprietor : **Van Doorne's Transmissie B.V.**
**Dr. Hub van Doorneweg 120 Postbus 500**
**NL-5026 RA Tilburg (NL)**

(72) Inventor : **van Dijk, Johannes Abraham**
**Visserstraat 2**
**NL-5612 BT Eindhoven (NL)**

(74) Representative : **Timmermans, Anthonius**
**C.Th., Ir. et al**
**European Patent Attorneys Octrooibureau**
**Zuid P.O. Box 2287**
**NL-5600 CG Eindhoven (NL)**

## Description

The invention relates to a method for mounting an assembled transmission belt for use on V-shaped pulleys and a device belonging thereto, said transmission belt consisting of one or more endless carrier(s) and of a number of elements provided displaceably on the carrier(s), said elements butting against each other with their main sides and having one or more recesses for receiving the carrier or carriers.

The transmission belt has one carrier if the elements have one recess and two carriers if there are two recesses per element. A carrier may be simple, e.g. in the shape of a substantially flat metal band of multiple, e.g. in the shape of an assembly of substantially flat metal bands fitting together, also called band pack. Hereinafter, in order to simplify the language, the word "carrier" will be used to refer to one carrier as well as to more carriers, which may be simple or multiply assembled, and "element" will be used to refer to an element having one recess as well as to an element having more recesses.

In particular the invention relates to a method for mounting transmission belts consisting of two endless carriers, each in the shape of a metal band pack, and on it fitting elements each having two side recesses, and otherwise of a construction as described above. Transmission belts of the type to which the invention relates are i.a. described in US-A-4,080,841 and EP-A-0014013. During use of the transmission belt the carrier is preserved from sliding sideways out of the elements by the conical pulley halves of a pulley between which the transmission belt runs, said pulley halves being in contact with the sides of each element, whilst elements bounding one another can be fixed relatively to each other by a projection of the one element, which fits a corresponding recess in the other element.

When assembling a transmission belt of the kind referred to there is the problem that when placing (by hand) the elements with their recesses on the band or the band pack, the final element is difficult to provide, especially if the elements are provided with projections. Moreover, a method is required by means of which the transmission belts can be assembled quickly, without much manual work and preferably entirely mechanically.

Furthermore the result should be a transmission belt with very little play between the elements themselves and between the assembly of elements and the carrier. A solution is described in the EP-A-0 204 360.

This know method for mounting an assembled transmission belt further comprises the following steps :
step 1, mounting a number of elements which is smaller than the ultimately required number of elements on an auxiliary annular assembly mould (11), whose diameter exceeds that of the endless band or band package ;
step 2, filling the gap between the elements which rest against one another, with a number of make-up elements ;
step 3, imparting the final aggregate of assembled elements a diameter which corresponds with the one required to receive the band or band package into the slot formed by the lateral recesses of the elements;
step 4, inserting the band or band package into the slot formed by the lateral recesses of the elements.

With this method and device belonging thereto satisfactory results can be achieved.

However, a number of disadvantages are attached thereto. Thus the desired dimensional accuracy of the definitely assembled transmission belt is limited because two separate, mutually unrelated measurements are necessary, viz. 1) of the diameter casu quo the length of the carrier and 2) of the interspace between the elements (for the final mounting) on a reference framework independent thereof, viz. an auxiliary mounting jig ; as a result the errors in measuring add. Eventually this will lead to mounted assembled transmission belts which may have too much play between the elements themselves and between elements and carrier.

A further consequence of this is too much wear of the assembled transmission belts. The invention aims at eliminating the above drawbacks.

The advantage of the method according to the invention relative to the method known from the EP-A-0 204 360 is that only one measurement is necessary instead of two for determining the joint thickness of the absent elements. This benefits the quality of the transmission belt. According to the invention this improvement is made possible because the band, or the band pack respectively, itself functions as a reference framework for determining the total thickness of the elements still absent.

The invention also relates to a device for carrying out the above method. This device for mounting joined-up elements provided with one or more recesses for receiving one or more bands or band packs can substantially be described as follows :
Therefore the method according to the invention comprises the following steps :
step 1a, clamping the continuous row of elements between radially expandable rings ;
step 1b, imparting the continuous row of elements clamped between the rings a diameter which corresponds with one required to receive the band of band package into the slot formed by the lateral recesses of the elements ;
step 1c, removing the row of elements from the assembly mould and inserting the band or band package into the slot formed by the lateral recesses of the row of elements ;

step 1d, pushing the elements together and measuring the gap between the final elements of the row of elements which rest against one other ;

step 1e, removing the band or band package and restoring the row of elements on the auxiliary annnular assembly mould, whereby in step 2, the filling of the gap between the elements takes place with a number of make-up elements, whose joint thickness in mounted addition corresponds with the gap measured ; in addition to which the following step is applied, wherein, in addition to step 2 ; in

step 2a, the final aggregate of assembled elements is clamped between the radially expandable rings and removed from the assembly mould ;

in addition to which the knowm steps 3 and 4 are applied.

The method according to the invention for mounting an assembled transmission belt is characterized according to a further development of the invention, in that imparting the elements is achieved by varying the diameter of the auxiliary assembly mould.

Device consisting of :

a. an auxiliary annular assembly mould on which elements can be placed, the diameter (or length) of said assembly mould being practically equal to that of the bands or band packs to be mounted ;

b. means for picking up all elements placed on the auxiliary annular assembly mould at the same time and moving them ;

c. two concentric rings, the larger one being internally expansive and the other, smaller one being externally expansive, such that a series of elements mounted according to a) can be clamped between said rings and the rings can simultaneously change their internal, external dimension respectively to defined positions while maintaining the clamping of the elements ;

d. one or more means which can place, temporarily or definitely, one or more bands or band packs in the recesses of the clamped elements by axial movement relative to the clamping rings ;

e. means for making it possible to measure the opening left by elements not yet placed ;

f. means for joining elements graded for thickness, such that the total thickness of the joined elements corresponds with the space measured according to e) and means for joining said elements with the other elements.

The device according to the invention makes it possible to assemble the transmission belt according to the method of the invention and, if elements having side recesses are used, it also makes it possible for the bands, band packs respectively to be mounted simultaneously. The latter is made possible by the system of concentric expansive rings. It has the accompanying advantage that the pace of the production process of transmission belts can be increased.

The length of the opening in the circle of elements that remains open initially depends on the thickness tolerance of the elements and that such that from a population of elements whose individual thicknesses are known a series having the required length can be assembled. Several possibilities for assembling said filling pack are possible, but they are outside the framework of the present invention.

The means which can pick up the elements placed on the auxiliary annular assembly mould preferably consist of an electromagnet, which is demagnetized after the row of picked-up elements has been moved between the expansive rings.

The means for clamping and holding the series of pre-mounted elements at a diameter to be changed may e.g. consist of radially simultaneously operating clamping means. Preferably they are two concentric metal rings, consisting of segments, which at their sides facing away from each other are provided with expansive, e.g. inflatable, rubber parts, whereby the metal rings consisting of segments are formed such that they clamp the elements together without covering the slots.

The means for manipulating the bands or band packs to a position above and inside the slots of the elements preferably consist of electromagnets too, which electromagnets are demagnetized after mounting of the bands.

The invention will be explained, not limitatively and simplified, by means of a drawing.

The drawing illustrates in :

fig 1 :    a view of an element having two slots ;

fig 2 :    a side view of said element

fig 3 :    a cross-section of the auxiliary annular assembly mould with an element placed thereon ;

fig 4 :    a diagrammatic section of a clamped pre-mounted series of elements as well as of the band packs which can be placed in the slots of the elements directed upwards and downwards ;

fig 5 :    a cross-section of the clampling device for the pre-mounted elements.

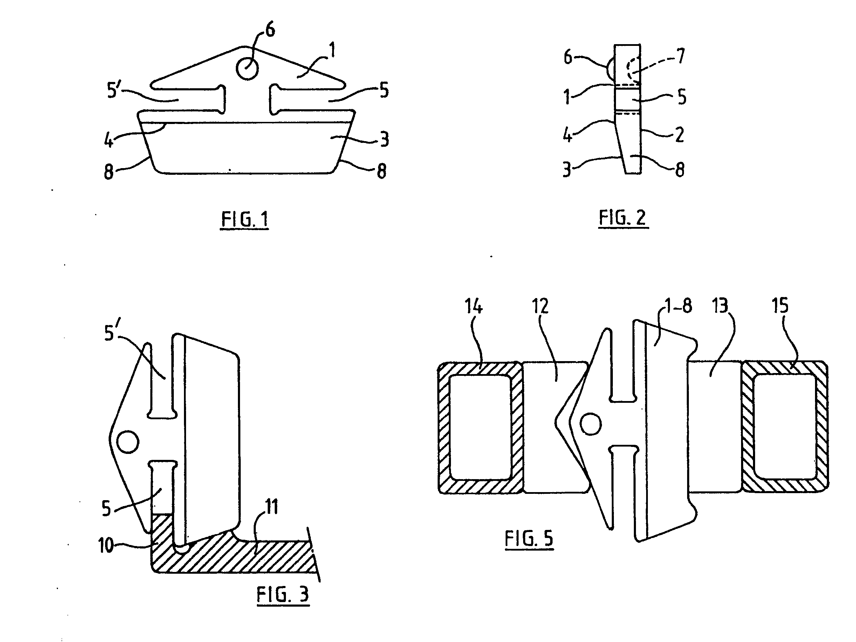

Fig 1 is a front view and fig 2 is a side view of an element to be mounted in the device to be described in more detail. The transition between the part of the main side 1 parallel to the main side 2 and the bevel 3 is formed by the roll-of zone or tilting line 4. Metal bands or band packs are received in the two opposing side recesses 5. During use, conical pulley halves of a pulley (not shown) being in touch with the bevelled sides 8 of each element. The elements are furthermore provided with mutual coupling means in the shape of a projection 6 which cooperates with a corresponding recess 7 of an adjacent corresponding element.

Figure 3 shows the upright edge 10 of the auxiliary annular assembly mould 11. The upright edge 10 fits the slot 5 of the elements placed on said edges according to fig. 1 and fig. 2.

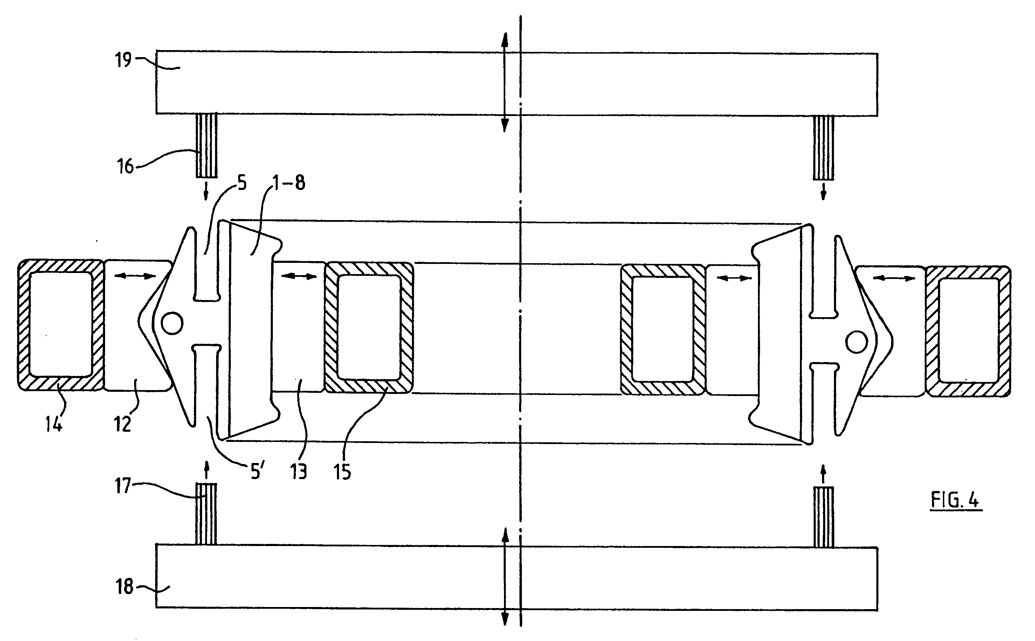

Fig. 4 shows the situation that arises when the elements have been taken off the auxiliary mould 11, e.g. by elements of an electromagnet (not shown) and are clamped between two concentric internal and external inflatable rubber rings (14 and 15 respectively), which are attached to and dimensioned by metal rings (12 and 13 respectively). This is illustrated in more detail with the same reference numbers in fig. 5.

The bands or band packs 16 and 17 are axially centred and are retained on electromagnets (18 and 19), axially movable relatively to the rings (12-15). It will be apparent that it is possible to mount two packs (16 and 17) simultaneously and that a 180° rotation of the unit of elements is not necessary.

The manipulation with the means briefly described above has already been described in the foregoing.

Instead of expansive rubber rings it is also possible to use other means which provide variation of diameter, such as axially movable cones or diaphragms.

Important is that the opening which remains during the pre-mounting on the auxiliary mould is so large that the correct filling measure can be chosen from elements, measured for thickness, from the normal production population and that by a correct choice of said elements the correct linear measure will be obtained. This implies (otherwise entirely dependent on the present dimensional tolerance), that an opening of 12 to 16 elements needs to be filled. With this number it is possible to determine and compose the correct length of a filling pack from the population of elements with their thickness tolerance.

## Claims

1. Method for mounting an assembled transmission belt, which transmission belt consists of one or more endless carriers in the shape of at least one metal band or band pack (16, 17) and of a number of cross elements provided displaceably on the band, the cross elements butting against each other with their main sides (1, 2) and having one or more recesses (5, 5') for receiving the band, whereby the method comprises the following steps :

step 1, mounting a number of elements which is smaller than the ultimately required number of elements on an auxiliary annular assembly mould (11), whose diameter exceeds that of the endless band or band package ;

step 2, filling the gap between the elements which rest against one another, with a number of make-up elements ;

step 3, imparting the final aggregate of assembled elements a diameter which corresponds with the one required to receive the band or band package into the slot formed by the lateral recesses of the elements;

step 4, inserting the band or band package into the slot formed by the lateral recesses of the elements, characterised in that the method comprises the following steps in addition to step 1 :

step 1a, clamping the continuous row of elements between radially expandable rings (12, 14 ; 13, 15) ;

step 1b, imparting the continuous row of elements clamped between the rings (12, 14 ; 13, 15) a diameter which corresponds with one required to receive the band or band package into the slot formed by the lateral recesses of the elements ;

step 1c, removing the row of elements from the assembly mould (11) and inserting the band or band package into the slot formed by the lateral recesses of the row of elements ;

step 1d, pushing the elements together and measuring the gap between the final elements of the row of elements which rest against one other ;

step 1e, removing the band or band package and restoring the row of elements on the auxiliary annnular assembly mould (11),

whereby in step 2, the filling of the gap between the elements takes place with a number of make-up elements, whose joint thickness in mounted addition corresponds with the gap measured ; in addition to which the following step is applied, wherein, in addition to step 2 : in

step 2a, the final aggregate of assembled elements is clamped between the radially expandable rings (12, 14 ; 13, 15) an removed from the assembly mould (11) ;

in addition to which the known steps 3 and 4 are applied.

4

2. Method according to claim 1, characterised in that imparting the elements is achieved by varying the diameter of the auxiliary assembly mould (11).

3. Device for mounting a transmission belt assembled from cross elements and provided with one or more metal bands or band packs, according to the method of claim 1 or 2, which device consists of :

a. an auxiliary annular assembly mould (11) on which elements (1-8) can be placed, the diameter (or length) or said assembly mould being substantially equal to that of the bands or band packs to be mounted ;

b. means for picking up all elements placed on the auxiliary annular assembly mould at the same time and moving them ;

c. two concentric rings (12-15) the larger one (12, 14) being internally expansive and the other, smaller one (13, 15) being externally expansive, such that a series of elements mounted according to a) can be clamped between said rings (12-15) and the rings can simultaneously change their internal, external dimension respectively to defined positions while maintaining the clamping of the elements ; characterised in that the device further consists of :

d. one ore more means (18, 19) which can place, temporarily or definitely, one or two bands or band packs in the recesses (5, 5′) of the clamped elements (1-8) by axial movement relative to the clamping rings (12-15) ;

e. means for making it possible to measure the opening left by elements (1-8) not yet placed ;

f. means for joining elements graded for thickness, such that the total thickness of the joined elements corresponds with the space measured according to e) and means for joining said elements with the other elements.

4. Device according to claim 3, characterised in that means are present for picking up and moving elements (1-8) placed on the auxiliary annular assembly mould (10, 11).

5. Device according to claim 4, characterised in that an electromagnet constitutes the means for picking up and moving the elements (1-8).

6. Device according to claim 5, characterised in that the means for clamping and retaining the pre-mounted elements consist of two concentric segmental metal rings (12, 13), which on their sides facing away from each other are provided with expansive, e.g. inflatable, rubber parts (14, 15), which are formed such that they clamp the elements (1-8) without covering the recesses (5, 5′).

7. Device according to any one or more of the preceding claims 3 to 6, characterised in that the means for manipulating the bands or band packs (16 and 17) to a position above and inside the recesses (5, 5′) of the elements (1-8), consist of elecytromagnets (18, 19) which can be demagnetized after mounting.

## Patentansprüche

1. Verfahren zur Montage eines zusammengesetzten Treibriemens, welcher Treibriemen aus einem oder mehreren endlosen Trägern in Form von wenigstens einem Metallband oder Bandpaket besteht (16, 17), sowie aus einer Reihe verschiebbar auf dem Band angebrachter Querglieder, die mit ihren Hauptseiten (1, 2) aneinander liegen, und die eine oder mehrere Aussparungen (5, 5′) haben, in die das Band aufgenommen werden kann, wobei das Verfahren aus den nachfolgenden Schritten besteht :

Schritt 1, bei dem eine kleinere Anzahl von Gliedern als die letztendlich gewünschte Anzahl von Gliedern auf eine ringförmige Hilfsmontageform (11) aufgesetzt wird, deren Durchmesser größer als der Durchschnitt des Endlosbandes oder des Bandpakets ist ;

Schritt 2, bei dem die Öffnung zwischen den aneinander liegenden Gliederen mit einer Reihe von Paßgliedern ausgefüllt wird ;

Schritt 3, bei dem das letztendliche Ganze der zusammengesetzten Glieder einen Durchmesser erhält, der mit dem Durchmesser übereinstimmt, der für die Aufnahme des Bands oder des Bandpakets in den von den Seitenflächen der Glieder gebildeten Schlitz erforderlich ist ;

Schritt 4, bei dem das Band oder das Bandpaket in den von den Aussparungen in den Seitenflächen der Glieder gebildeten Schlitz angebracht wird, dadurch gekennzeichnet, daß das Verfahren außer aus Schritt 1 aus den nachfolgenden Schritten besteht :

Schritt 1a, bei dem die zusammengeschlossene Reihe von Gliedern zwischen radial expansionsfähige Ringe (12, 14 ; 13, 15) eingeklemmt wird ;

Schritt 1b, bei dem die zwischen die Ringe (12, 14 ; 13, 15) eingeklemmte zusammengeschlossene Reihe von Gliederen einen Durchmesser bekommt, der mit dem Durchmesser übereinstimmt, der für die Aufnahme des Bands oder des Bandpakets in den von den Seitenflächen der Glieder gebildeten Schlitz erforderlich ist ;

Schritt 1c, bei dem die Reihe von Gliedern von der Montageform (11) abgenommen wird und das Band oder das Bandpaket in den von den Seitenflächen der Glieder gebildeten Schlitz angebracht wird ;

Schritt 1d, bei dem die Glieder zusammengedrückt werden und die Öffnung zwischen den aneinander liegenden Gliederen aus der Reihe gemessen wird ;

Schritt 1e, bei dem das Band oder das Bandpaket entfernt wird und die Gliederreihe wieder auf die ringförmige Hilfsmontageform (11) aufgesetzt wird ;

wobei in Schritt 2 das Füllen der Öffnung zwischen den Gliedern durch die Anbringung einer Reihe von Paßgliedern erfolgt, deren Gesamtdicke in montiertem Zustand mit der gemessenen Öffnung übereinstimmt ; wobei außerdem der nächste Schritt ausgeführt wird, wobei neben Schritt 2 : in

Schritt 2a die letztendliche Gesamtzahl der zusammengesetzten Glieder zwischen die radial expansionsfähigen Ringe (12, 14 ; 13, 15) eingeklemmt wird und von der Montageform (11) abgenommen wird ; wobei anschließend die Schritte 3 und 4 ausgeführt werden.

2. Verfahren nach Anspruch 1, dadurch gekennzeichnet, daß der Durchmesser bestimmt wird, indem der Durchmesser von der Hilfsmontageform (11) entfernt wird.

3. Vorrichtung für die Montage eines Treibriemens nach dem Verfahren von Anspruch 1 oder 2, der aus Quergliedern zusammengesetzt ist und der ein oder mehrere Metallbänder oder -bandpakete umfaßt, wobei die Vorrichtung besteht aus :

a. Einer ringförmigen Hilfsmontageform (11), auf die Glieder (1-8) aufgesetzt werden können, wobei der Durchmesser (oder die Länge) der Montageform nahezu mit dem/der des zu montierenden Bands oder Bandpakets übereinstimmt ;

b. Mitteln zur gleichzeitigen Aufnahme und Verstellung aller auf die ringförmige Montageform aufgesetzten Glieder ;

c. Zwei konzentrische Ringe (12-15), wobei der größere Ring (12, 14) innen expansionsfähig ist und der andere, der kleinere Ring (13, 15) außen expansionsfähig ist, in der Weise, daß eine nach a) montierte Reihe von Gliedern zwischen diese Ringe (12-15) geklemmt werden kann und die innere bzw. äußere Abmessung der Ringe simultan in bestimmte Positionen geändert werden kann, während die Glieder eingeklemmt bleiben, dadurch gekennzeichnet, daß die Vorrichtung weiter besteht aus :

d. Einem oder mehreren Organen (18, 19), die ein oder mehrere Bänder oder Bandpakete vorübergehend oder endgültig in die Aussparungen (5, 5') der eingeklemmten Glieder (1-8) durch axiale Verstellung gegenüber den Klemmringen (12-15) einsetzen können ;

e. Einem Organ, das es ermöglicht, die noch nicht mit Gliedern (1-8) gefüllte Öffnung auszumessen ;

f. Einem Organ, um die nach Dicke sortierten Glieder derart zusammenzufügen, daß die gesamte Dicke der zusammengefügten Glieder mit dem nach e) ausgemessenen Raum übereinstimmt, und einem Organ zur Zusammenfügung dieser Glieder mit den anderen Gliedern.

4. Vorrichtung nach Anspruch 3, dadurch gekennzeichnet, daß ein Organ vorhanden ist, um die auf die ringförmige Hilfsmontageform aufgesetzten Glieder (1-8) aufzunehmen und zu verstellen.

5. Vorrichtung nach Anspruch 4, dadurch gekennzeichnet, daß das Organ zur Aufnahme und Verstellung der Glieder (1-8) aus einem Elektromagneten besteht.

6. Vorrichtung nach Anspruch 5, dadurch gekennzeichnet, daß das Organ zum Einklemmen und Festhalten der vormontierten Glieder aus zwei konzentrischen, segmentierten Metallringen (12, 13) besteht, die auf den einander abgewandten Seiten mit expansionsfähigen, beispielsweise aufblasbaren Gummiteilen (14, 15) versehen sind, die derart geformt sind, daß sie die Glieder (1-8) einklemmen, ohne daß die Aussparungen (5, 5') bedeckt werden.

7. Vorrichtung nach einem oder mehreren der vorigen Ansprüche 3-6, dadurch gekennzeichnet, daß das Organ, das dazu vorgesehen ist, die Bänder oder Bandpakete (16 und 17) über und in die Aussparungen (5, 5') in den Gliedern (1-8) zu bringen, aus Elektromagneten (18, 19) besteht, die nach der Montage entmagnetisiert werden können.

## Revendications

1. Méthode pour le montage d'une courroie de transmission composite, laquelle courroie est constituée par un ou plusieurs supports sans fin sous la forme d'au moins une bande ou paquet de bandes métalliques (16, 17) et d'un certain nombre de maillons transversaux placés sur la bande de façon coulissante, et qui s'appuient les uns contre les autres par leurs faces principales, (1, 2), et qui comportent une ou plusieurs échancrures (5, 5') dans lesquelles la bande peut être introduite, cette méthode comprenant les étapes suivantes :

une étape 1, dans laquelle on monte un nombre de maillons plus petit que le nombre final désiré, sur un gabarit de montage auxiliaire annulaire (11) dont le diamètre est supérieur au diamètre de la bande ou du paquet de bandes sans fin ;

EP 0 279 473 B1

une étape 2, dans laquelle on remplit avec un certain nombre de maillons d'appoint l'espace entre les maillons appuyés les uns contre les autres ;

une étape 3, dans laquelle on amène l'ensemble final des maillons assemblés à un diamètre qui correspond au diamètre nécessaire pour l'introduction de la bande ou du paquet de bandes dans la fente formée par les faces latérales des maillons ;

une étape 4, dans laquelle on introduit la bande ou le paquet de bandes dans la fente formée par les échancrures dans les faces latérales des maillons, avec la caractéristique que, outre l'étape 1, la méthode comporte les étapes suivantes :

une étape 1a, dans laquelle on emprisonne la rangée jointive formée par les maillons entre des anneaux modifiables en direction radiale (12, 13 ; 14, 15) ;

une étape 1b, dans laquelle on donne à la rangée jointive de maillons emprisonnés le diamètre qui est nécessaire pour l'introduction de la bande ou du paquet de bandes dans la fente formée par les faces latérales des maillons ;

une étape 1c, dans laquelle on enlève la rangée de maillons du gabarit de montage (11), et introduit la bande ou le paquet de bandes dans la fente formée par les faces latérales des maillons ;

une étape 1d, dans laquelle on resserre les maillons et mesure l'ouverture entre les maillons appuyés les uns contre les autres ;

une étape 1e dans laquelle on retire la bande ou le paquet de bandes et replace la rangée de maillons sur le gabarit de montage (11),

le remplissage de l'ouverture entre les maillons dans l'étape 2 étant réalisé au moyen d'un certain nombre de maillons d'appoint, dont l'épaisseur totale une fois montée correspond à l'ouverture mesurée ; et l'étape suivante étant en outre exécutée, avec, à côté de l'étape 2 :

une étape 2a, dans laquelle on emprisonne le nombre final de maillons assemblés entre les anneaux modifiables en direction radiale (12, 14 ; 13, 15) et les enlève du gabarit de montage (11) ;

les étapes 3 et 4 étant effectuées ensuite.

2. Procédé selon la revendication 1, avec la caractéristique que le diamètre est déterminé en changeant le diamètre du gabarit de montage auxiliaire (11).

3. Dispositif pour le montage, selon la méthode conforme à la revendication 1 ou 2, d'une courroie de transmission composée de maillons transversaux et comportant une ou plusieurs bandes ou paquets de bandes métalliques, ce dispositif comprenant :

a. un gabarit de montage auxiliaire annulaire (11) sur lequel on peut placer des maillons (1-8), le diamètre (ou la longueur) de ce gabarit de montage étant à peu près égal à celui de la bande ou du paquet de bandes à monter ;

b. des moyens pour enlever et déplacer tous ensemble les maillons placés sur le gabarit de montage ;

c. deux anneaux concentriques (12-15), avec le plus grand des anneaux (12, 14) se déformant vers l'intérieur et l'autre, l'anneau le plus petit (14, 15), se déformant vers l'extérieur, de telle façon qu'une série de maillons montés selon a) puisse être emprisonné entre ces anneaux (12-15), et que la dimension intérieure d'une part, et la dimension extérieure d'autre part, de ces anneaux puisse être modifiée dans des états déterminés, tandis que les maillons restent emprisonnés, avec la caractéristique que le dispositif comporte en outre :

d. un ou plusieurs organes (18, 19) qui, grâce à un déplacement axial par rapport aux anneaux d'emprisonnement (12-15), peuvent placer une ou plusieurs bandes ou paquets de bandes, de façon provisoire ou définitive, dans les échancrures (5, 5') des maillons (1-8) maintenus serrés ;

e. un organe qui permet de mesurer l'espace qui n'est pas encore rempli avec les maillons (1-8) ;

f. un organe pour regrouper des maillons assortis selon leurs épaisseurs de telle façon que l'épaisseur totale des maillons ajoutés corresponde à l'espace mesuré d'après e), et un organe pour regrouper ces maillons avec les autres.

4. Dispositif selon la revendication 3, avec la caractéristique qu'il y a un organe pour enlever et déplacer les maillons placés sur le gabarit de montage (1-8) ;

5. Dispositif selon la revendication 4, avec la caractéristique que l'organe pour enlever et déplacer les maillons (1-8) consiste en un électro-aimant.

6. Dispositif selon la revendication 5, avec la caractéristique que l'organe pour emprisonner et maintenir les maillons déjà montés consiste en deux anneaux segmentés concentriques en métal (12, 13) qui sont équipés de pièces modifiables (14, 15) sur les côtés opposés l'un à l'autre, pièces, par exemple en caoutchouc, formées de telle manière qu'elles peuvent emprisonner les maillons (1-8) sans que les échancrures (5, 5') soient couvertes ;

7. Dispositif selon une ou plusieurs des revendications 3-6 qui précèdent, avec la caractéristique que l'organe pour amener les bandes ou paquets de bandes (16 et 17) au dessus des échancrures (5, 5') et dans

7

EP 0 279 473 B1

celles-ci consiste en électro-aimants (18, 19) qui peuvent être démagnétisés après montage.

FIG. 1

FIG. 2

FIG. 3

FIG. 5

FIG. 4

EP 0 279 473 B1